# EUROPEAN PATENT APPLICATION

(11) **EP 4 760 442 A1**
(43) Date of publication of application: **17.06.2026**
(21) Application number: 25218099.7
(22) Date of filing: 24.11.2025
(51) Int. Cl.: G05D 16/10

(54) **PRESSURE REGULATING VALVE**

(30) Priority: 22.11.2024 US 202418957061
(71) Applicant: Pratt & Whitney Canada Corp., (01BE5) Longueuil, QC J4G 1A1 (CA)
(72) Inventor: GIGNAC, Stephane, (01BE5) Longueuil, J4G 1A1 (CA)
(74) Representative: Dehns

(57) **Abstract**

A pressure regulating valve (22) is provided that includes a housing (24), a sleeve (30), a piston (32), an adjustment nut (34), and a piston spring (36). The housing (24) includes a sleeve bore (26). The sleeve (30) has a side wall (42) that extends axially between a base end (44) and a distal end (46), an end wall (48) disposed at the base end (44), an interior cavity (50) that extends axially between the base end (44) and the distal end (46), and a plurality of ports (28). The sleeve (30) is disposed within the sleeve bore (26). The piston (32) extends axially between a land end (56) and a spring end (58). The adjustment nut (34) is engaged with the sleeve (30), and is configured for axial translation relative to the sleeve (30). The piston spring (36) is disposed to provide a spring force on the adjustment nut (34) and the piston (32). The sleeve (30) includes an asymmetric feature (68, 68A, 68C, 68D) that engages with the housing (24) to prevent rotation of the sleeve (30) relative to the housing (24).

## Description

### Technical Field

The present disclosure relates to valves for controlling a fluid flow and to pressure regulating valves in particular.

### Background Information

Aircraft engine oil systems are designed to lubricate and cool components that engage and disengage, such as gears, bearings, and journal bearings or static elements such as internal cavity walls to avoid overheating. To accomplish these functions, engine oil is typically circulated through an oil tank, a pressure pump, one or more cavities containing the components requiring engine oil, and then back to the oil tank. The engine oil flow pressure within the system can be controlled in different ways. For example, it is known to use a pressure regulating valve (PRV) to control system engine oil pressure. The PRV may be configured to operate at predetermined fluid pressure values. It would be useful to provide a PRV that facilitates installation and adjustment.

### SUMMARY

According to an aspect of the present invention, a pressure regulating valve is provided that includes a housing, a sleeve, a piston, an adjustment nut, and a piston spring. The housing includes a sleeve bore. The sleeve has a side wall that extends axially between a base end and a distal end, an end wall disposed at the base end, an interior cavity that extends axially between the base end and the distal end, and a plurality of ports. The sleeve is disposed within the sleeve bore. The piston extends axially between a land end and a spring end. The adjustment nut is engaged with the sleeve, and is configured for axial translation relative to the sleeve. The piston spring is disposed to provide a spring force on the adjustment nut and the piston. The sleeve includes an asymmetric feature that engages with the housing to prevent rotation of the sleeve relative to the housing.

In an embodiment of the above, the asymmetric feature that engages with the housing may be a male portion of a mating male and female mating pair, and the housing may include a female feature that mates with the male portion.

In an embodiment according to any of the previous embodiments, the asymmetric feature that engages with the housing to prevent rotation of the sleeve relative to the housing may be a body that extends outwardly from an exterior surface of the sleeve.

In an embodiment according to any of the previous embodiments, the side wall (SW) may include a SW exterior surface, and the exterior surface may be the SW exterior surface, and the body may be a tab extending radially outwardly from the SW exterior surface at a position disposed adjacent the distal end.

In an embodiment according to any of the previous embodiments, the housing may include a slot configured to receive the tab.

In an embodiment according to any of the previous embodiments, the end wall (EW) may include an EW exterior surface, and the exterior surface may be the EW exterior surface, and the body may be a post extending axially outwardly from the EW exterior surface at a position spaced apart from an axially extending central axis of the pressure regulating valve.

In an embodiment according to any of the previous embodiments, the housing may include an aperture configured to receive the post.

In an embodiment according to any of the previous embodiments, the end wall (EW) may include an EW exterior surface, and the exterior surface may be the EW exterior surface, and the body may have a non-circular configuration, and the body may extend axially outwardly from the EW exterior surface.

In an embodiment according to any of the previous embodiments, the housing may include a slot configured to receive the body having the non-circular configuration.

In an embodiment according to any of the previous embodiments, the body may have a length and a width, wherein the length is greater than the width.

In an embodiment according to any of the previous embodiments, an inner diameter surface may define the interior cavity of the sleeve, and the adjustment nut may include an outer radial surface, and the outer radial surface may be threadedly engaged with the inner diameter surface.

In an embodiment according to any of the previous embodiments, rotation of the adjustment nut in a first rotational direction may produce the axial translation of the adjustment nut relative to the sleeve in a first axial direction, and rotation of the adjustment nut in a second rotational direction may produce the axial translation of the adjustment nut relative to the sleeve in a second axial direction, wherein the second axial direction is opposite the first axial direction.

In an embodiment according to any of the previous embodiments, rotation of the adjustment nut in the first rotational direction may increase the spring force on the adjustment nut and the piston, and rotation of the adjustment nut in the second rotational direction decreases the spring force on the adjustment nut and the piston.

In an embodiment according to any of the previous embodiments, the piston may include a spring housing having a spring cavity extending axially inward from the spring end, and the adjustment nut may include a spring end surface and a spring bore disposed in the spring end surface, and a first portion of the piston spring may be disposed within the spring cavity and a second portion of the piston spring may be disposed within the spring bore.

In an embodiment according to any of the previous embodiments, the pressure regulating valve may include a cap attached to the housing, and the cap may be engaged with the adjustment nut.

In an embodiment according to any of the previous embodiments, the end wall may include an exterior surface, and the asymmetric feature may extend axially outwardly from the exterior surface of the end wall, and the housing may include a positional indicator configured to indicate a location of a housing feature configured to mate with the asymmetric feature.

In an embodiment according to any of the previous embodiments, the end wall may include an exterior surface, and the asymmetric feature may extend axially outwardly from the exterior surface of the end wall, and the sleeve may include a positional indicator configured to indicate a location of the asymmetric feature.

According to an aspect of the present invention, a pressure regulating valve is provided that includes a housing, a sleeve, a piston, an adjustment nut, a piston spring, and a key. The housing has a sleeve bore. The sleeve has a side wall that extends axially between a base end and a distal end, an end wall disposed at the base end, an interior cavity that extends axially between the base end and the distal end, and a plurality of ports. The sleeve is disposed within the sleeve bore. The piston extends axially between a land end and a spring end. The adjustment nut is engaged with the sleeve, and is configured for axial translation relative to the sleeve. The piston spring is disposed to provide a spring force on the adjustment nut and the piston. The key is engaged with the sleeve and the housing, and is configured to prevent rotation of the sleeve relative to the housing.

In an embodiment of the above, the housing may include a first key slot and the sleeve may include a second key slot, and the key may be engaged with the first key slot and the second key slot. The second key slot may be disposed in the side wall.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic example of a lubrication system that includes an oil tank, a pressure pump, and a present disclosure pressure regulating valve (PRV).
FIG. 2 is a diagrammatic sectional view of a present disclosure pressure regulating valve embodiment.
FIG. 2A is a diagrammatic end view showing a pressure regulating valve embodiment disposed within a housing.
FIG. 3 is a diagrammatic sectional view of a present disclosure pressure regulating valve embodiment.
FIG. 4 is a diagrammatic sectional view of a present disclosure pressure regulating valve embodiment.
FIG. 4A is a diagrammatic sectional view taken at the sectional lines 4A-4A shown in FIG. 4.
FIG. 4B is a diagrammatic end view showing a pressure regulating valve embodiment disposed within a housing.
FIG. 5 is a diagrammatic sectional view of a present disclosure pressure regulating valve embodiment.
FIG. 5A is a diagrammatic sectional view taken at the sectional lines 5A-5A shown in FIG. 5.
FIG. 5B is a diagrammatic end view showing a pressure regulating valve embodiment disposed within a housing.

### DETAILED DESCRIPTION

An aircraft propulsion system may include a thermal engine; e.g., a gas turbine engine, an internal combustion engine, or the like. The engine propulsion system may include one or more fluid systems, such as a lubrication system that circulates a fluid lubricant (e.g., which may be referred to hereinafter as "oil" or "engine oil") to both lubricate and cool components of the thermal engine; e.g., bearings, gears (e.g., within a gearbox), and other components.

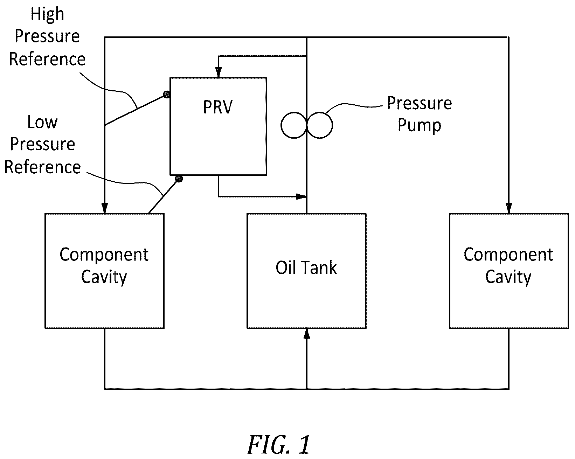

FIG. 1 is a diagrammatic example of a lubrication system that includes an oil tank, a pressure pump, and a present disclosure pressure regulating valve (PRV). The oil tank is a reservoir configured to hold a volume of engine oil or other fluid lubricant. The pressure pump may be a positive displacement pump such as a gear pump. The pressure pump may be in mechanical communication with the thermal engine (e.g., via a gearbox - not shown), or may be an electrically driven pump, or the like. Components within the lubrication system may be connected to one another by a respective fluid line; e.g., a pipe, a tube, or the like configured to contain and permit passage of a fluid therethrough. The term "in fluid communication" is used herein to mean that a fluid line (or other flow conduit) extends between the named components and is configured to contain a fluid flow between the components.

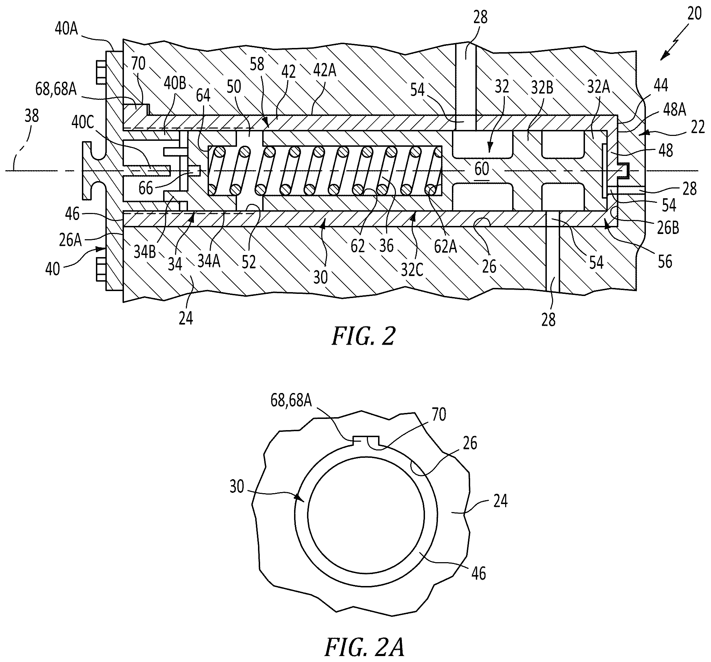

FIG. 2 is a diagrammatic illustration of a PRV assembly 20 that includes a PRV 22 disposed within a housing 24. The housing 24 may be specific to the PRV assembly 20, or it may be incorporated within another engine component. Other than as detailed herein, the present disclosure is not limited to any housing 24 configuration; e.g., independent or incorporated. The housing 24 includes a PRV sleeve bore 26 that extends axially between a cap end 26A and a base end 26B. The housing 24 further includes a plurality of fluid access ports 28 that are in fluid communication with the PRV sleeve bore 26.

The PRV 22 includes a sleeve 30, a piston 32, an adjustment nut 34, a piston spring 36, and an axially extending center axis 38. In some embodiments, the PRV 22 may include a cap 40.

The sleeve 30 includes a side wall 42 that extends axially between a base end 44 and a distal end 46. An end wall 48 is disposed at the base end 44, and includes an exterior surface 48A. The side wall 42 includes an exterior surface 42A that extends axially between the base end 44 and the distal end 46, and an interior cavity 50 defined by an inner diameter surface 52 that extends axially between the base end 44 and the distal end 46. The diagrammatic representation of the sleeve 30 has a constant diameter exterior surface 42A to facilitate the description herein. The present disclosure PRV 22 is not limited to a PRV 22 having a side wall 42 with a constant diameter exterior surface 42A. The sleeve exterior surface 42A (regardless of whether the exterior surface 42A is a constant diameter, or whether the sleeve 30 has a plurality of locating surfaces at a given diameter, or the like) is configured to be received within the PRV sleeve bore 26 disposed within the housing 24. The sleeve 30 is shown having several ports 54 (e.g., high and low pressure reference ports, a pump flow port, and the like) that allow fluid to pass through the sleeve 30 into or out of the interior cavity 50 of the sleeve 30. The fluid access ports 28 of the housing 24 are configured to align with the ports 54 disposed in the sleeve 30 for fluid communication into and out of the PRV 22. The number of ports 28, 54 and the position of the ports 28, 54 (sleeve 30 and housing 24) may vary depending on the configuration and application of the PRV 22. A portion of the inner diameter surface 52 may be threaded for engagement with the adjustment nut 34 as will be detailed herein.

The piston 32 extends axially between a land end 56 and a spring end 58. The piston 32 example shown in FIG. 2 includes an end land 32A, an intermediate land 32B, and a spring housing 32C. A piston shaft 60 extends axially between the spring housing 32C and the end land 32A and is attached to the end land 32A, the intermediate land 32B, and the spring housing 32C. The present disclosure is not limited to the piston 32 embodiment shown in FIG. 2; e.g., the piston 32 may include a single land or more than two lands. The spring housing 32C includes a spring cavity 62 that extends between a base surface 62A and the spring end 58 of the piston 32. The spring cavity 62 is open at the spring end 58 of the piston 32 and is configured to receive a portion of the piston spring 36. The outer diameter surfaces of the end land 32A, the intermediate land 32B, and the spring housing 32C are less than the diameter of the inner diameter surface 52 of the sleeve interior cavity 50 to allow the piston 32 to be received within the sleeve interior cavity 50, and to permit axial travel of the piston 32 within the sleeve interior cavity 50.

The adjustment nut 34 includes an outer radial surface 34A. A spring bore 64 is disposed in the surface at the piston spring end 58. The spring bore 64 extends axially and is configured to receive a portion of the piston spring 36. In some embodiments, the adjustment nut 34 may include castellation elements 34B. In some embodiments, the outer radial surface 34A may be threaded for engagement with the inner diameter surface 52 of the sleeve 30. In some embodiments, the adjustment nut 34 includes a driving feature 66 configured to permit engagement with a driving tool (not shown) that is operable to rotationally drive the adjustment nut 34. In the example shown in FIG. 2, the driving feature 66 is an aperture configured to receive a tool bit (e.g., a ¼" drive bit). The present disclosure is not limited to any particular driving feature 66 configuration.

The cap 40 includes an attachment flange 40A and a body 40B extending outwardly from the attachment flange. The body 40B is configured to be received within the interior cavity 50 of the sleeve 30. In some embodiments the body 40B may include castellation elements 40C that are configured to engage with the castellation elements 34B of the adjustment nut 34. The castellation elements 40C of the cap 40 engage with the castellation elements 34B of the adjustment nut 34 to limit or prevent rotation of the adjustment nut 34. Fasteners may be used to attach the cap 40 to the housing 24.

The piston spring 36 may be a coil spring. The piston spring 36 has a spring rate that is indicative of the force produced by the piston spring 36 in a compressed form. The spring rate may be linear or substantially linear, but that is not required. In a compressed form (e.g., when the piston spring 36 is compressed to a length that is less than the length of the piston spring 36 at rest), the piston spring 36 produces a force acting on the surfaces compressing the piston spring 36; e.g., surfaces of the piston 32 and the adjustment nut 34. In the present disclosure PRV 22, the force produced by the piston spring 36 is applied to the piston 32 in a direction away from the adjustment nut 34. This may be described as the piston spring 36 applying a "biasing" force against the piston 32. The piston spring 36 may be chosen to produce a force that is commensurate with the fluid pressure ranges to which the PRV 22 is exposed; e.g., the PRV 22 provides pressure regulating when a fluid pressure exceeds the spring force and causes the piston 32 to move axially, thereby compressing the piston spring 36.

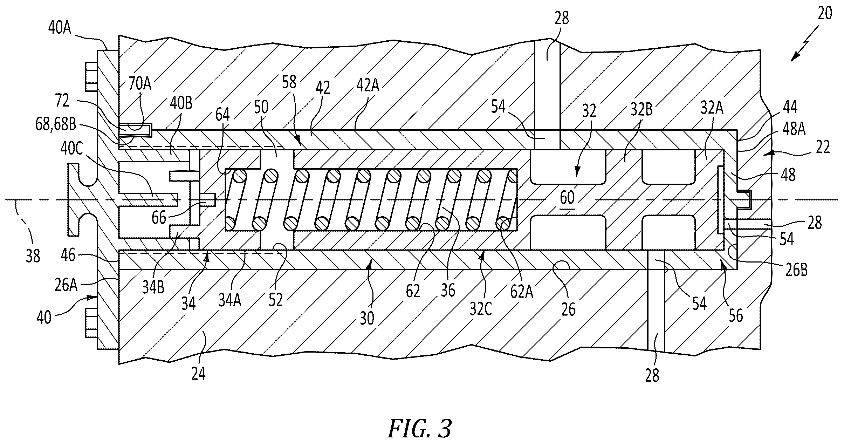

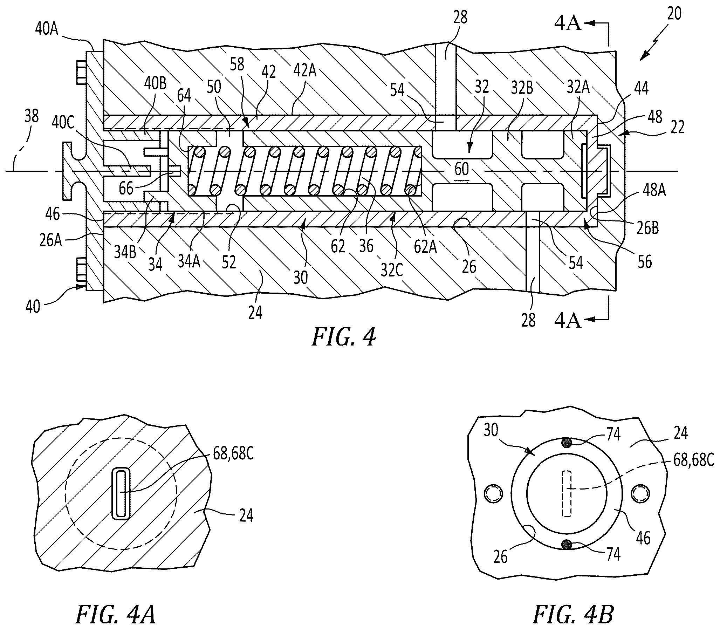

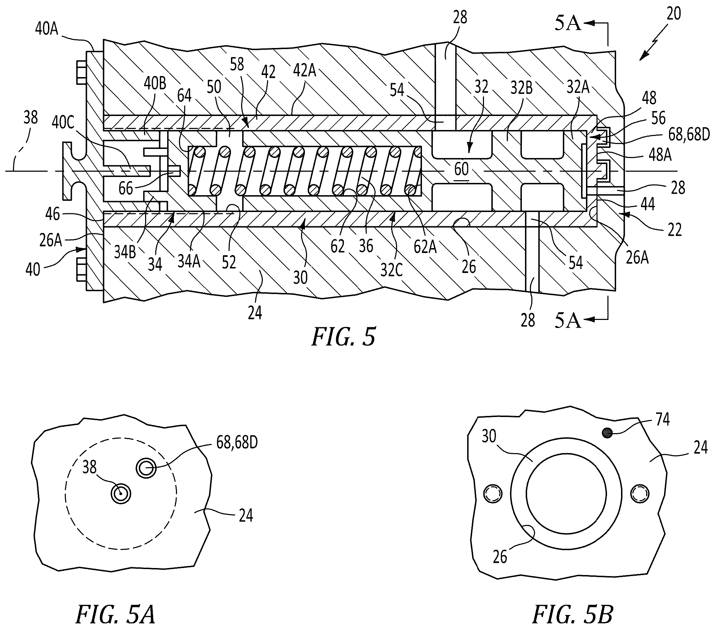

The sleeve 30 includes an asymmetric feature 68 that engages with the housing 24 to prevent rotation of the sleeve 30 relative to the housing 24. The embodiment diagrammatically shown in FIGS. 2 and 2A includes a tab 68A that is received within a mating slot 70 disposed within the housing 24. The tab 68A may extend radially outwardly from the exterior surface 42A of the sleeve side wall 42. In the embodiment shown in FIGS. 2 and 2A, the tab 68A is flush with the distal end 46 surface of the sleeve 30 and extends axially a distance away from the distal end 46. The embodiment diagrammatically shown in FIG. 3 includes a slot 68B disposed within the sleeve side wall 42 and a housing slot 70A disposed in the housing 24. The sleeve side wall slot 68B and the housing slot 70A are collectively configured to receive a key 72 that prevents sleeve 30 rotation relative to the housing 24. The embodiments diagrammatically shown in FIGS. 4, 4A, 5, and 5A include an asymmetric feature 68 extending outwardly from an exterior surface 48A of the end wall 48 of the sleeve 30. The housing 24 is configured with a mating aperture that receives the asymmetric feature 68. In the embodiment shown in FIGS. 4 and 4A, the asymmetric feature 68C has a body with a length and a width and the length is greater than the width; e.g., an oval shaped, or rectangularly shaped feature, or any other non-circular configuration. In the embodiment shown in FIGS. 5 and 5A, the asymmetric feature 68D is a post that extends axially out from the exterior surface 48A of the end wall 48, and that is spaced apart from the center axis 38 of the PRV 22 (and therefore spaced apart from the center axis of the sleeve 30). In the specific example diagrammatically shown in FIGS. 5 and 5A, the asymmetric feature 68D post is disposed at a two o'clock position. It should be noted that FIGS. 5 and 5A diagrammatically illustrate a single asymmetric feature 68D extending axially out from the exterior surface 48A of the end wall 48. The present disclosure is not limited to having a single asymmetric feature. For example, a pair of asymmetric identical features 68D aligned 180 degrees apart from one another can be disposed to extend axially out from the exterior surface 48A with mating apertures disposed in the housing 24 (or three features 68D spaced 120 degrees from one another, etc.). An arrangement having two asymmetric identical features 68D aligned 180 degrees apart would allow the sleeve 30 to be disposed in two positions rather than one, and may facilitate assembly. In such an embodiment, positional indicators 74 may be used to indicate the circumferential location of the asymmetric features 68D. In addition, in some embodiments a single asymmetric feature 68D may be included with a plurality of mating apertures (e.g., "N" number of mating apertures, where "N" is an integer equal or greater than two) disposed in the housing 24. In this embodiment, the single asymmetric feature 68D and the plurality of mating apertures allow the sleeve 30 to be disposed in a plurality of different positions (e.g., in "N" number of positions), which again may facilitate assembly. Here again, positional indicators 74 may be used to indicate the circumferential location of mating apertures / possible sleeve positions. The embodiments described above and shown in the FIGS. 2, 4, 4A, 5, and 5A, illustrate asymmetric features 68 that are configured as a male component of a mating male and female pair. In alternative embodiments, the asymmetric feature 68 of the sleeve 30 may be configured as a female component of a mating male and female pair, with the male component included with the housing 24.

In those embodiments wherein the sleeve 30 includes an asymmetric feature 68 extending outwardly from an exterior surface of the end wall 48 of the sleeve 30 (e.g., see FIGS. 4, 4A, 5, and 5A), the present disclosure PRV assembly 20 may include one or more positional indicators 74 to facilitate assembly of the PRV 22 within the housing 24. In the embodiment shown in FIGS. 4-4B, the asymmetric feature 68 has a body with a length and a width and the length is greater than the width. FIG. 4B illustrates a pair of positional indicators 74 disposed on the distal end surface of the sleeve 30 that are aligned with the length of the asymmetric feature 68. In the embodiment shown in FIGS. 5-5B, the asymmetric feature 68 is a post spaced apart from the center axis 38 of the PRV 22 and disposed at a circumferential position; e.g., at a two o'clock position. FIG. 5B illustrates a positional indicator 74 disposed on a surface of the housing 24 that is indicative of the asymmetric position of the aperture within the housing 24 that is configured to receive the post 68D.

During assembly of the PRV 22, the sleeve 30 is inserted into the PRV sleeve bore 26 disposed within the housing 24. The asymmetric feature 68 of the sleeve 30 engages with the mating feature of the housing 24 and the sleeve 30 is positionally fixed relative to the housing 24. The piston 32 is inserted into the interior cavity 50 of the sleeve 30. The piston spring 36 is inserted into the piston spring cavity 62. The adjustment nut 34 is threadedly engaged with the sleeve 30 and rotated to draw the adjustment nut 34 towards the piston 32. The piston spring 36 is received within the spring bore 64 of the adjustment nut 34. At some point in the adjustment nut 34 axial travel, one end of the piston spring 36 will be in contact with the base surface of the spring bore 64 and the other end of the piston spring 36 will be in contact with the base surface of the piston spring cavity 62. Further threaded engagement of the adjustment nut 34 will compress the piston spring 36 and create a preload on the piston 32. The specific amount of preload is adjustable and may be varied to suit the particular PRV application. **In** the absence of the asymmetric feature 68 of the sleeve 30 positionally fixing the sleeve 30 relative to the housing 24, it is possible that the sleeve 30 may rotate within the PRV sleeve bore 26; i.e., the adjustment nut 34 and sleeve 30 may rotate together rather than the adjustment nut 34 rotating relative to the sleeve 30. If the sleeve 30 rotates, it may be difficult or impossible to achieve the desired amount of preload on the piston spring 36, and/or determine exactly the amount of preload on the piston spring 36. The present disclosure resolves this issue by positionally fixing the sleeve 30 relative to the housing 24. Once, the adjustment nut 34 is installed to the desired position, the cap 40 may be attached. In those instances wherein the adjustment nut 34 and the cap 40 include castellations 34B, 40C, the castellation elements 40C of the cap 40 and the castellation elements 34B of the adjustment nut 34 operate to limit or prevent rotation of the adjustment nut 34.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details. It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A pressure regulating valve (22) for an aircraft propulsion system, comprising:
a housing (24) having a sleeve bore (26);
a sleeve (30) having a side wall (42) that extends axially between a base end (44) and a distal end (46), an end wall (48) disposed at the base end (44), an interior cavity (50) that extends axially between the base end (44) and the distal end (46), and a plurality of ports (28), wherein the sleeve (30) is disposed within the sleeve bore (26);
a piston (32) that extends axially between a land end (56) and a spring end (58);
an adjustment nut (34) engaged with the sleeve (30), and configured for axial translation relative to the sleeve (30); and
a piston spring (36) disposed to provide a spring force on the adjustment nut (34) and the piston (32);
wherein the sleeve (30) includes an asymmetric feature (68, 68A, 68C, 68D) that engages with the housing (24) to prevent rotation of the sleeve (30) relative to the housing (24).

2. The pressure regulating valve of claim 1, wherein the asymmetric feature (68A, 68D) that engages with the housing (24) is a male portion (68A, 68D) of a mating male and female mating pair, and the housing (24) includes a female feature (70) that mates with the male portion (68A, 68D).

3. The pressure regulating valve of claim 1 or 2, wherein the asymmetric feature (68A, 68C, 68D) that engages with the housing (24) to prevent rotation of the sleeve (30) relative to the housing (24) is a body (68A, 68C, 68D) that extends outwardly from an exterior surface (42A, 48A) of the sleeve (30).

4. The pressure regulating valve of claim 3, wherein the side wall, SW, (42) includes a SW exterior surface (42A), and the exterior surface (42A, 48A) is the SW exterior surface (42A), and the body (68A) is a tab (68A) extending radially outwardly from the SW exterior surface (42A) at a position disposed adjacent the distal end (46), optionally wherein the housing (24) includes a slot (70) configured to receive the tab (68A).

5. The pressure regulating valve of claim 3, wherein the end wall, EW, (48) includes an EW exterior surface (48A), and the exterior surface (42A, 48A) is the EW exterior surface (48A), and the body (68D) is a post (68D) extending axially outwardly from the EW exterior surface (48A) at a position spaced apart from an axially extending central axis (38) of the pressure regulating valve (22), optionally wherein the housing (24) includes an aperture configured to receive the post (68D).

6. The pressure regulating valve of claim 3, wherein the end wall, EW, (48) includes an EW exterior surface (48A), and the exterior surface (42A, 48A) is the EW exterior surface (48A), and the body (68C) has a non-circular configuration, and the body (68C) extends axially outwardly from the EW exterior surface (48A),
optionally wherein the housing (24) includes a slot configured to receive the body (68C) having the non-circular configuration, and/or the body (68C) has a length and a width, wherein the length is greater than the width.

7. The pressure regulating valve of any preceding claim, wherein an inner diameter surface (52) defines the interior cavity (50) of the sleeve (30), and the adjustment nut (34) includes an outer radial surface (34A), and the outer radial surface (34A) is threadedly engaged with the inner diameter surface (52).

8. The pressure regulating valve of any preceding claim, wherein rotation of the adjustment nut (34) in a first rotational direction produces the axial translation of the adjustment nut (34) relative to the sleeve (30) in a first axial direction, and rotation of the adjustment nut (34) in a second rotational direction produces the axial translation of the adjustment nut (34) relative to the sleeve (30) in a second axial direction, wherein the second axial direction is opposite the first axial direction.

9. The pressure regulating valve of claim 8, wherein rotation of the adjustment nut (34) in the first rotational direction increases the spring force on the adjustment nut (34) and the piston (32), and rotation of the adjustment nut (34) in the second rotational direction decreases the spring force on the adjustment nut (34) and the piston (32).

10. The pressure regulating valve of any preceding claim, wherein the piston (32) includes a spring housing (32C) having a spring cavity (62) extending axially inward from the spring end (58); and
wherein the adjustment nut (34) includes a spring end surface and a spring bore (64) disposed in the spring end surface; and
wherein a first portion of the piston spring (36) is disposed within the spring cavity (62) and a second portion of the piston spring (36) is disposed within the spring bore (64).

11. The pressure regulating valve of any preceding claim, further comprising a cap (40) attached to the housing (24), wherein the cap (40) is engaged with the adjustment nut (34).

12. The pressure regulating valve of any preceding claim, wherein the end wall, EW, (48) includes an/the EW exterior surface (48A), and the asymmetric feature (68, 68A, 68C, 68D) extends axially outwardly from the EW exterior surface (48A), and
the housing (24) includes a positional indicator (74) configured to indicate a location of a housing feature configured to mate with the asymmetric feature (68, 68A, 68C, 68D), and/or the sleeve (30) includes a positional indicator (74) configured to indicate a location of the asymmetric feature (68, 68A, 68C, 68D).

13. A pressure regulating valve (22) for an aircraft propulsion system, comprising:
a housing (24) having a sleeve bore (26);
a sleeve (30) having a side wall (42) that extends axially between a base end (44) and a distal end (46), an end wall (48) disposed at the base end (44), an interior cavity (50) that extends axially between the base end (44) and the distal end (46), and a plurality of ports (28), wherein the sleeve (30) is disposed within the sleeve bore (26);
a piston (32) that extends axially between a land end (56) and a spring end (58);
an adjustment nut (34) engaged with the sleeve (30), and configured for axial translation relative to the sleeve (30);
a piston spring (36) disposed to provide a spring force on the adjustment nut (34) and the piston (32); and
a key (72) engaged with the sleeve (30) and the housing (24), wherein the key (72) is configured to prevent rotation of the sleeve (30) relative to the housing (24).

14. The pressure regulating valve of claim 13, wherein housing (24) includes a first key slot (70A) and the sleeve (30) includes a second key slot (68B), and the key (72) is engaged with the first key slot (70A) and the second key slot (68B).

15. The pressure regulating valve of claim 14, wherein the second key slot (68B) is disposed in the side wall (42).
